# EUROPEAN PATENT SPECIFICATION

(11) **EP 1 079 128 B1**
(45) Date of publication and mention of the grant of the patent: **24.05.2006**
(21) Application number: 99926790.9
(22) Date of filing: 24.06.1999
(51) Int. Cl.: F16D 3/224, F16D 3/223

(54) **CONSTANT VELOCITY UNIVERSAL JOINT**
HOMOKINETISCHES GELENK
JOINT HOMOCINETIQUE

(30) Priority: 12.03.1999 JP 6703299; 12.03.1999 JP 6703399
(43) Date of publication of application: 28.02.2001
(60) Divisional application: 06001576.5
(73) Proprietor: NTN CORPORATION, Osaka-shi, Osaka 550-0003 (JP)
(72) Inventor: Kadota, Tetsuro, Iwata-shi, Shizuoka 438-0037 (JP); Yamazaki, Kennta, Iwata-shi, Shizuoka 438-0037 (JP)
(74) Representative: White, Duncan Rohan
(86) International application number: PCT/JP1999/003371
(87) International publication number: WO 2000/055518

(56) References cited:
- DE-A- 19 653 573
- JP-A- 1 035 122
- JP-A- 3 277 822
- JP-A- 9 177 809
- JP-A- 11 182 569
- JP-A- 11 190 355
- JP-A- 47 035 444
- JP-A- 55 030 581
- JP-A- 59 065 619

## Description

The present invention relates to a constant velocity universal joint that is suited to applications where rotation backlash is undesirable, and is particularly preferable for the steering apparatus of an automobile.

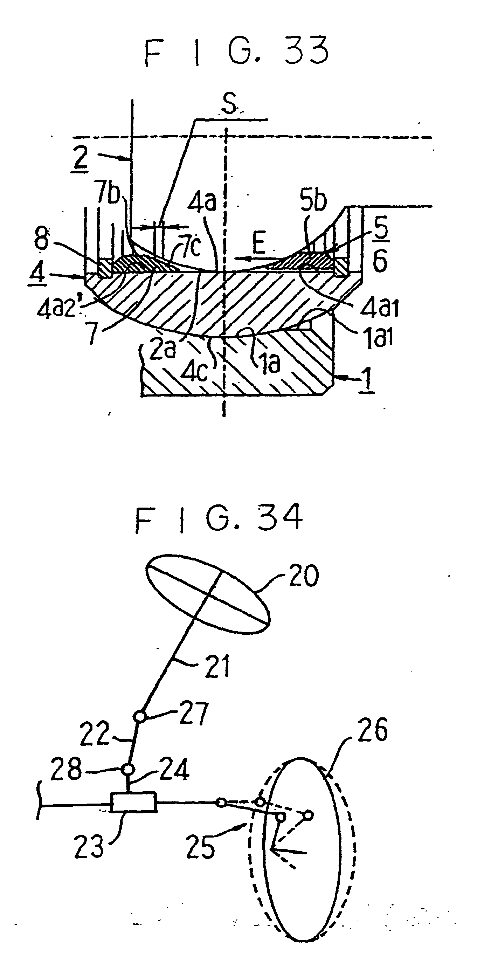

In the steering apparatus of an automobile, for example as shown schematically in Fig. 34, rotation torque imparted to a steering wheel 20 is transmitted via a main shaft 21 of a steering column and an intermediate shaft 22 to a gear shaft (pinion shaft or the like) 24 of a steering gear 23, while being converted to a linear motion by the mechanism of the steering gear 23 thereby to be transmitted via a link mechanism (knuckle or the like) 25 to wheels 26 as steering force. The steering gear 23 may be one of various types including rack and pinion type, ball screw type and worm roller type, while the rack and pinion type is predominantly used for the reason of high rigidity and light weight thereof. The intermediate shaft 22 is disposed at an angle to the main shaft 21 and the gear shaft 24, and is connected to the main shaft 21 and the gear shaft 24 via universal joints 27, 28, for the purpose of absorbing the impact energy in case of collision.

While the Cardan joint (universal joint employing cross yokes) has been predominantly used for the universal joints (27, 28) of the steering apparatus, constant velocity universal joints are being increasingly employed instead of the Cardan joint in order to allow a larger angle in the joint (in conjunction with the layout of vehicle components) and improve the movement of the joint (feel of the steering operation).

Meanwhile a constant velocity universal joint of ordinary constitution has a small clearance (inner gap) between torque transmitting ball and a ball track, which inevitably results in rotation backlash (play in the circumferential direction) taking place in the joint when the direction of rotation changes. Thus use of the constant velocity universal joint of the ordinary constitution in the steering apparatus leads to such problems as the loss of stability in steering, and loss of sharp or direct feel of steering.

In the field of automobile, constant velocity universal joints have many records of applications to the drive shaft, and the constant velocity universal joint of the ordinary constitution is normally designed to such specifications that satisfy the requirements of the drive shaft. In the case of the steering apparatus, however, since less load torque is applied to the joint and the joint rotates at lower speeds than the drive shaft, the constant velocity universal joint of the ordinary constitution has rather excessively higher specifications compared to the required characteristics, and therefore improvements are required for the reduction of joint weight and manufacturing cost.

The ball fixed type constant velocity universal joint of this type also requires the complicated assembly process as described above, and therefore has such disadvantages as follows.
(1) The assembly work requires skilled technique and is difficult to mechanize (automate).
(2) It is necessary to make the guide grooves of the inner and outer joint members longer (in the axial direction) than the length required for the function, in order to facilitate the assembly of the balls, thus resulting in larger joint dimension.
(3) It is necessary to make the size of the pocket of the cage in the circumferential direction larger, in order to facilitate the assembly of the balls (because the balls move in the circumferential direction in the pocket of the cage when the inner and outer joint members are caused to make angular displacement). This makes a disadvantage in the design of the cage in terms of strength.
(4) It is necessary to prepare the inner joint member and the shaft separately (in case the inner joint member and the shaft are prepared as an integral part, the shaft interferes with the outer joint member when assembling the balls, thus making it impossible to secure the amount of angular displacement required for the assembly). This leads to increases in the number of parts and in the number of assembly steps.

An object of the present invention is to solve the problem of rotation backlash in the ball fixed type constant velocity universal joint, and provide a simpler, light weight; compact and low-cost ball fixed type constant velocity universal joint that can be assembled in an improved process.

Another object of the present invention is to ensure good feel of rotation (smoothness of rotation) and, when applied to the steering apparatus in particular, improve the performance such as the feel of steering, while maintaining the constant velocity characteristics of this type of constant velocity universal joint.

Yet another object of the present invention is to reduce the resistance to the rotation in the constant velocity universal joint of this type and ensure good feel of rotation (smoothness of rotation) and, when used in a steering apparatus in particular, improve the performance such as the steering force, auto-centering of the steering wheel and the feel of steering.

DE-A-19653573 discloses a ball fixed type constant velocity universal joint comprising an outer joint member having a curved guide groove formed in the axial direction on a spherical inner circumferential surface thereof, an inner joint member having a curved guide groove formed in the axial direction on a spherical outer circumferential surface thereof, ball disposed in a ball track formed by the coordination of the guide groove of the outer joint member and the guide groove of the inner joint member, and a cage that holds the ball, with the center of the guide groove of the outer joint member and the center of the guide groove of the inner joint member being offset to the opposite sides to each other by equal distances in the axial direction with respect to the center plane of the joint that includes the center of the ball, the ball track being gradually reduced toward the opening or the innermost side of the joint;
the inner joint member is allowed to make relative displacement in the axial direction with respect to the cage, and elastic pressing means having a spherical surface that makes fitting contact with the outer circumferential surface of the inner joint member is interposed between the outer circumferential surface of the inner joint member and the inner circumferential surface of the cage, so that the elastic force of the elastic pressing means presses the outer circumferential surface of the inner joint member to the side opposite to the offset direction of center of the guide groove thereof.

The present invention is characterised in that at least a region on the opening side of the inner circumferential surface of the cage is a cylindrical surface that fits with the outer circumferential surface of the inner joint member, and said elastic pressing means is disposed on the cylindrical surface.

The inner joint member makes a relative displacement in the axial direction opposite to the offset direction under the urging pressure of the elastic pressing means, thereby to press the ball, and stops at a position where the inner gap between the balls and the guide grooves of the inner and outer joint members disappears. As a result, a certain amount of preload is applied in the axial direction to the ball, thus eliminating the rotation backlash (play in the circumferential direction). Also because the spherical surface of the elastic pressing means presses the outer circumferential surface of the inner joint member, the surface pressure in the portion of contact between both members is reduced and the outer circumferential surface of the inner joint member can be guided by the spherical surface.

The above configuration makes it possible to assemble the inner joint member into the inner circumferential surface of the cage after assembling the cage and the ball into the outer joint member.

In the ball fixed type constant velocity universal joint of the invention the region on the opening side of said inner circumferential surface of the outer joint member may be a cylindrical surface that fits with the outer circumferential surface of the cage.

The inner joint member and a shaft may be formed as an integral part.

Since the inner joint member can be assembled after assembling the cage and the balls in the outer joint member, it is made possible to integrate the inner joint member and the shaft (to form in an integral part, or bond together) thereby decreasing the number of parts and the number of assembly steps, without causing any trouble in the assembly operation.

The constant velocity universal joint of the present invention is light in weight, small in size and low cost, and rotates smoothly without backlash with less resistance to rotation, while being capable of taking a large operating angle, and is therefore particularly preferable for the steering apparatus of an automobile.

### BRIEF DESCRIPTION OF THE DRAWINGS

Fig. 1 shows a cross sectional view (Fig. 1a) illustrating first embodiment of the present invention and a longitudinal sectional view (Fig.1b) taken along line b-b in Fig.1a.
Fig. 2 is an enlarged longitudinal sectional view of portion X in Fig. 1.
Fig. 3 is a longitudinal sectional view showing an outer joint member.
Fig. 4 is a longitudinal sectional view showing an inner joint member.
Fig. 5 shows a longitudinal sectional view (Fig. 5a) of a cage and a rightward view (Fig. 5b) of Fig. 5a.
Fig. 6 shows a front view (Fig. 6a) of elastic pressing means and a sectional view (Fig. 6b) taken along line b-b in Fig.6a.
Fig. 7 shows a process of assembling the constant velocity universal joint of the first embodiment.
Fig. 8 is a partially enlarged longitudinal sectional view in modification of the first embodiment.
Fig. 9 shows a cross sectional view (Fig. 9a) illustrating second embodiment of the present invention and a longitudinal sectional view (Fig. 9b) taken along line b-b in Fig.9a.
Fig. 10 is an enlarged longitudinal sectional view of portion X in Fig.9.
Fig. 11 is a longitudinal sectional view showing an outer joint member.
Fig. 12 is a longitudinal sectional view showing an inner joint member.
Fig. 13 shows a longitudinal sectional view (Fig. 12a) of a cage and a rightward view (Fig. 13b) of Fig. 13a.
Fig. 14 shows a front view (Fig. 14a) of a retaining member and a sectional view (Fig. 14b) taken along line b-b in Fig.14a.
Fig. 15 shows a process of assembling the constant velocity universal joint of the second embodiment.
Fig. 16 is a longitudinal sectional view of the constant velocity universal joint of third embodiment.
Fig. 17 is a cross sectional view taken along line O-O in Fig.16 (boot is omitted).
Fig. 18 is an enlarged longitudinal sectional view of a key portion in Fig.1.
Fig. 19 is a longitudinal sectional view (partially side view) of the outer joint member.
Fig. 20 is a longitudinal sectional view (partially side view) of the inner joint member.
Fig. 21 shows a longitudinal sectional view (Fig. 21a) of the cage and a rightward view (Fig. 21b) of Fig. 21a.
Fig. 22 shows a front view (Fig. 22a) of the elastic member and a sectional view (Fig. 22b) taken along line b-b in Fig. 22a.
Fig. 23 is an enlarged sectional view of a key portion of the constant velocity universal joint according to modification of the third embodiment.
Fig. 24 is an enlarged sectional view of a key portion of the constant velocity universal joint according to another modification of the third embodiment.
Fig. 25 is a longitudinal sectional view of the constant velocity universal joint of fourth embodiment.
Fig. 26 is a cross sectional view taken along line 0-0 in Fig.25 (boot is omitted).
Fig. 27 is an enlarged longitudinal sectional view of a key portion in Fig. 25.
Fig. 28 is a longitudinal sectional view (partially side view) of the outer joint member.
Fig. 29 is a longitudinal sectional view (partially side view) of the inner joint member.
Fig. 30 shows a longitudinal sectional view (Fig. 30a) of the cage and a rightward view (Fig. 30b) of Fig. 30a.
Fig. 31 shows a front view (Fig. 31a) of the elastic member and a sectional view (Fig. 31b) taken along line b-b in Fig. 31a.
Fig. 32 is an enlarged sectional view of a key portion of the constant velocity universal joint according to modification of the forth embodiment.
Fig. 33 is an enlarged sectional view of a key portion of the constant velocity universal joint according to another modification of the fourth embodiment.
Fig. 34 shows schematically an example of the automobile steering apparatus.

### DESCRIPTION OF THE PREFERRED EMBODIMENTS

Now preferred embodiments of the present invention will be described below with reference to the accompanying drawings.

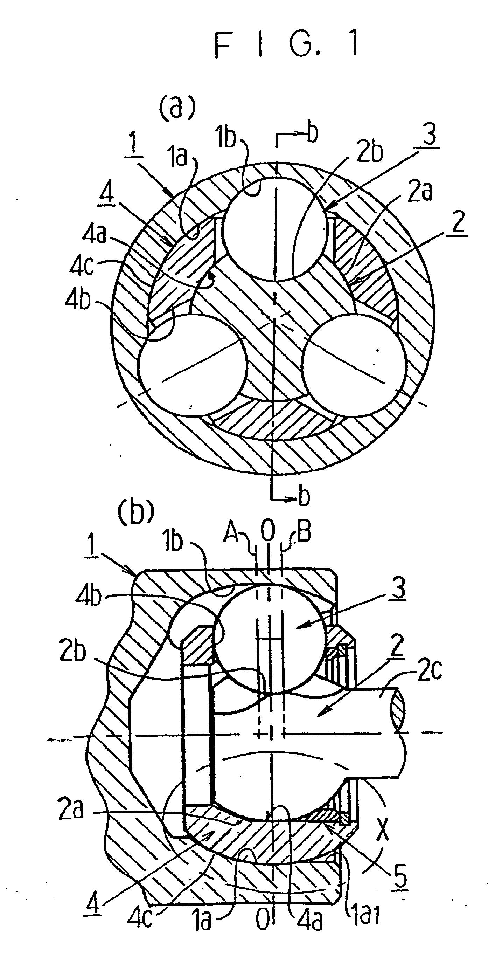

As shown in Fig.1, the constant velocity universal joint of this embodiment comprises an outer joint member 1 that has, for example, three curved guide grooves 1b formed in the axial direction on a spherical inner circumferential surface 1a thereof, an inner joint member 2 that has, for example, three curved guide grooves 2b formed in the axial direction on a spherical outer circumferential surface 2a thereof, for example, three balls 3 disposed in ball tracks that are formed by the coordination of the guide grooves 1b of the outer joint member 1 and the guide grooves 2b of the inner joint member 2, a cage 4 that holds the balls 3, and elastic pressing means 5 interposed between the outer circumferential surface 2a of the inner joint member 2 and the inner circumferential surface 4a of the cage 4.

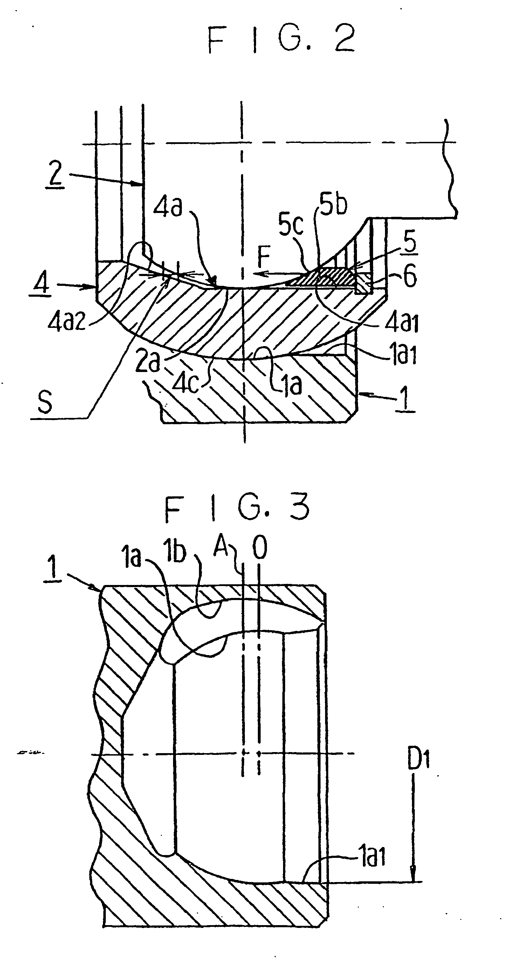

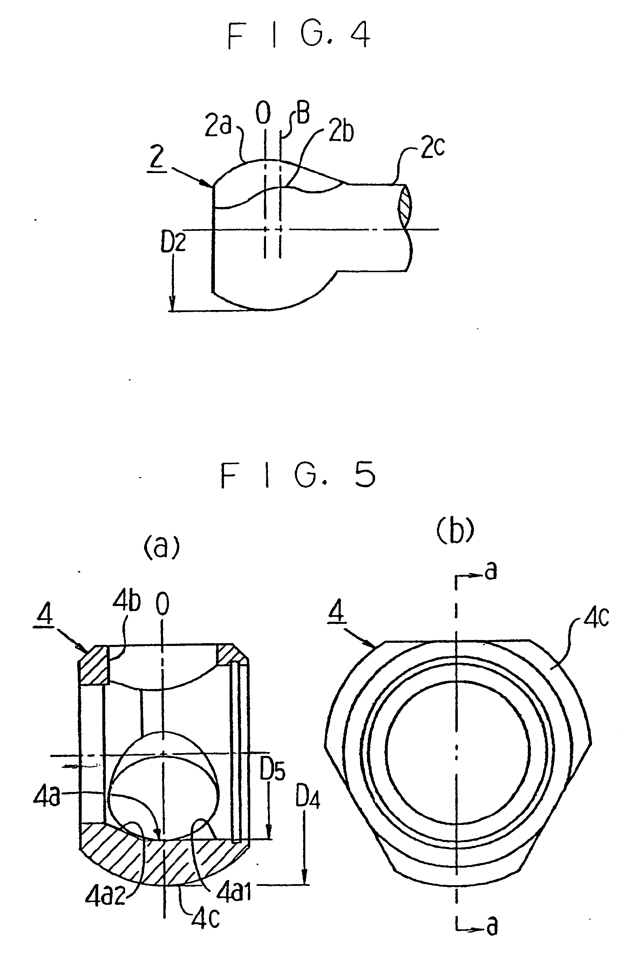

As shown in Fig.3, the outer joint member 1 has a cup shape that opens at one end thereof and is provided with either a shaft formed integrally therewith at the other end not shown or a separate shaft being bonded by proper means. Center A of the guide groove 1b is offset by a predetermined distance in the axial direction (toward the innermost side of the joint in this embodiment) with respect to the center of curvature O of the inner circumferential surface 1a. A region on the opening side of the inner circumferential surface 1a is formed in a cylindrical surface 1a1. Inner radius D1 of the cylindrical surface 1a1 is made equal to or larger than the radius D4 (refer to Fig.5) of the outer circumferential surface 4c of the cage 4 (D1 ≧ D4).

In this embodiment, as shown in Fig.4, the inner joint member 2 and the shaft 2c are formed as an integral part. This configuration is chosen to decrease the number of parts and the number of assembly steps. Center B of the guide groove 2b is offset by a predetermined distance in the axial direction (toward the opening side of the joint in this embodiment) with respect to the center of curvature O of the outer circumferential surface 2a. The offset distance of the guide groove 2b is the same as the offset distance of the guide groove 1b of the outer joint member 1, but opposite in direction (the guide groove 1b being offset toward the innermost side, and the guide groove 2b being offset toward the opening side).

In this embodiment, as shown in Fig.5, the cage 4 has three window-like pockets 4b that accommodate the balls 3. The inner circumferential surface 4a of the cage 4 has a region on the opening side formed in a cylindrical surface 4a1 and an inner region formed in a conical surface 4a2. Inner radius D5 of the cylindrical surface 4al is made equal to or larger than the outer radius D2 of the outer circumferential surface 2a of the inner joint member 2 (D5 ≧ D2). The innermost region may also be a spherical surface or a cylindrical surface. The outer circumferential surface 4c of the cage 4 is a spherical surface (center of curvature at O) having radius D4. The cage 4 may be made of a metal, but may also be made of a resin in order to reduce the weight and cost.

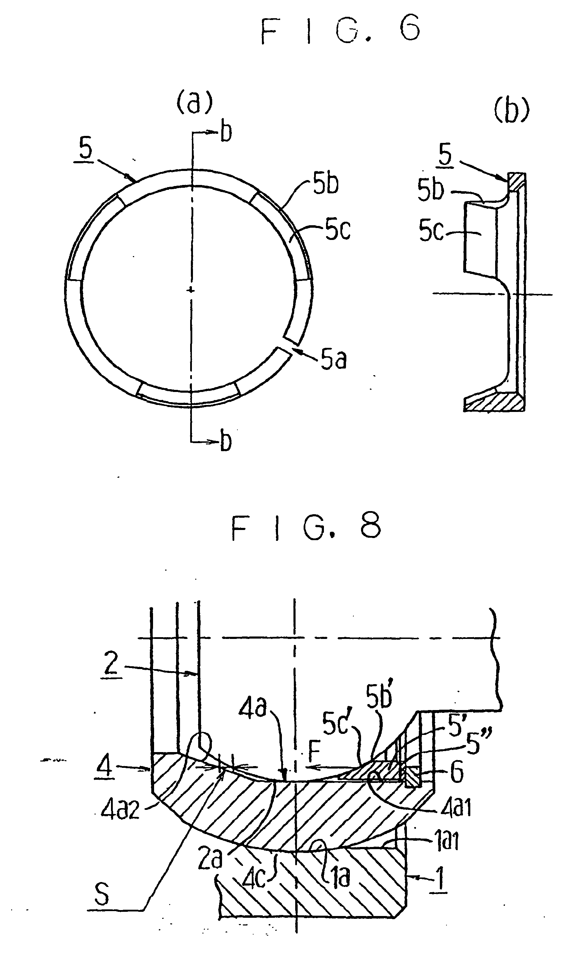

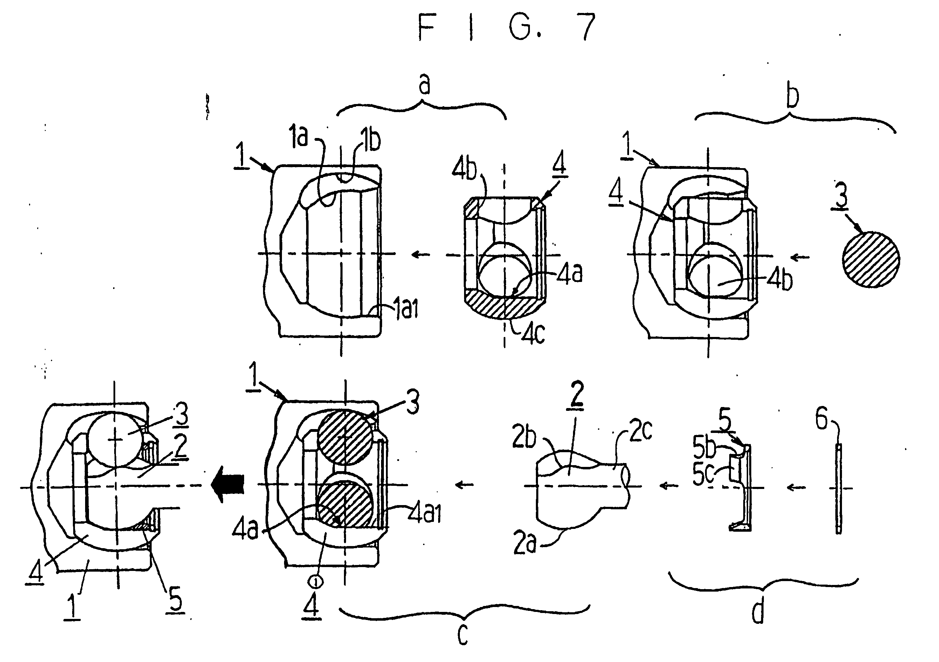

In this embodiment, as the elastic pressing means 5 a split ring that can freely contract and expand as shown in Fig.6 is adopted. The elastic pressing means 5 is made of spring steel or the like, and has an opening 5a and three claws 5b that protrude in the axial direction. End of each of the claws 5b is formed in a concave spherical surface 5c having the same radius of curvature as that of the outer circumferential surface 2a of the inner joint member 2. The elastic pressing means 5 may also be made of an elastic material such as a resin, a rubber or the like.

Fig.7 shows the process of assembling the constant velocity universal joint of this embodiment. The assembling process comprises a step of assembling the cage 4 into the inner circumferential surface 1a of the outer joint member 1 (step a), a step of assembling the balls 3 into the pocket 4b of the cage 4 (step b), a step of assembling the inner joint member 2 into the inner circumferential surface 4a of the cage 4 (step c) and a step of assembling the elastic pressing means 5 into the inner circumferential surface 4a of the cage 4 (cylindrical surface 4a1) and securing the elastic pressing means with a retainer ring 6 to prevent coming off thereof (step d).

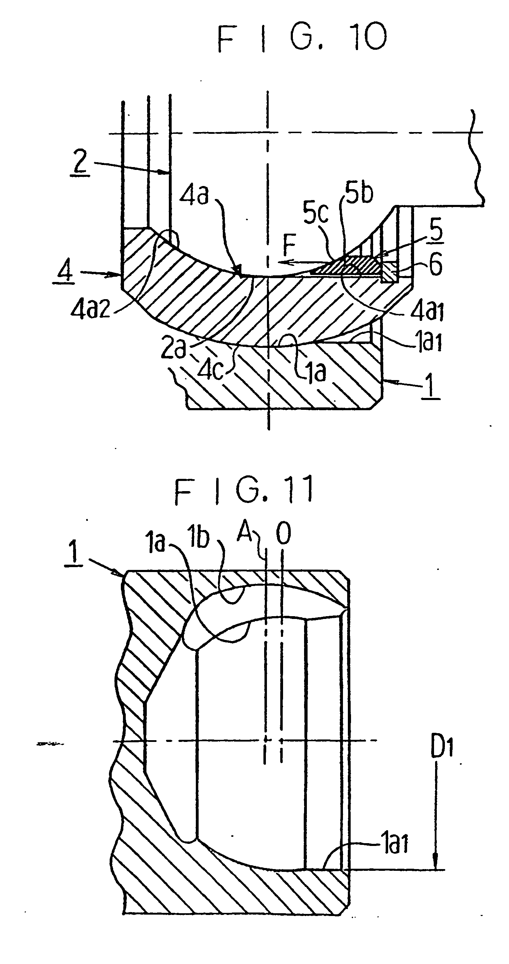

In the assembling step a, since the opening side region of the inner circumferential surface 1a of the outer joint member 1 is the cylindrical surface 1a1 having radius D1 (≧ D4), the cage 4 can be assembled into the outer joint member 1 by advancing in the axial direction with the axis of the cage 4 being aligned with the axis of the outer joint member 1. As a result, it is made easier to assemble the cage 4 compared to the case of the prior art process (step b of Fig.10).

In the assembling step b, the balls 3 can be assembled into the pocket 4b directly from the inner circumferential side of the cage 4. As a result, it is made easier to assemble the balls 3 compared to the prior art process (step c of Fig.10). Also because it is not necessary to make an angular displacement of the inner joint member 2 and the cage 4 with respect to the outer joint member 1 when assembling the balls 3, it is made possible to make the dimensions in the axial direction of the guide grooves 1b, 2b of the inner and outer joint members 1, 2 and the dimension of the pocket 4b of the cage 4 in the circumferential direction thereof smaller than those of the prior art. Consequently, the joint can be made lighter in weight and smaller in size, and the strength thereof (strength of cage) can be improved.

In the assembling step c, since the opening side region of the inner circumferential surface 4a of the cage 4 is the cylindrical surface 4al having radius D5 (≧ D2) and the center B of the guide groove 2b of the inner joint member 2 is offset toward the opening side, the inner joint member 2 can be assembled into the inner circumferential surface 4a of the cage 4 and the balls 3 by advancing the inner joint member 2 in the axial direction under such a state that the axis of the inner joint member 2 is aligned with the axes of the cage 4 and the outer joint member 1. Thus it is made easier to assemble the inner joint member 2 than in the case of prior art process (step a of Fig.10). Also because the inner joint member 2 can be assembled after assembling the cage 4 and the balls 3 into the outer joint member 1, thus integrating the shaft 2c with the inner joint member 2 does not cause any difficulty in assembling.

In the assembling step d, the elastic pressing means 5 is assembled into the inner circumferential surface 4a (cylindrical surface 4al) of the cage 4, and the outer circumferential surface 2a of the inner joint member is pressed toward the innermost side in the axial direction by the spherical surface 5c, with the retainer ring 6 applied to prevent the elastic pressing means 5 from coming off. Instead of using the retainer ring 6, the elastic pressing means 5 may also be secured to prevent it from coming off by such means as caulking the elastic pressing means 5 onto the cylindrical surface 4al of the cage 4, bonding (welding, etc.) and fitting engagement (for example, a projection provided on the elastic pressing means 5 is fitted in an engagement groove formed in the cylindrical surface 4al of the cage 4).

When the outer joint member 1, the inner joint member 2, the balls 3, the cage 4, and the elastic pressing means 5 have been assembled in the configuration described above, the constant velocity universal joint of this embodiment shown in Fig.1 is completed. Center A of the guide groove 1b of the outer joint member 1 and center B of the guide groove 2b of the inner joint member 2 are offset on the opposite sides to each other (center A is offset toward the innermost side of the joint and center B is offset toward the opening of the joint) in the axial direction by the same distances with respect to the center plane O of the joint that includes the centers of the balls 3. Thus the ball track formed by the coordination of the guide groove 1b and the guide groove 2b has a wedge shape that expands toward the innermost side and gradually reduces toward the opening side.

As shown in Fig.2 (enlarged view of portion X of Fig.1), a clearance S is formed in the axial direction between the inner circumferential surface 4a of the cage 4 (conical surface 4a2) and the outer circumferential surface 2a of the inner joint member 2, thereby to allow a relative displacement of the inner joint member 2 in the axial direction with respect to the cage 4. The outer circumferential surface 2a of the inner joint member 2 is pressed to the side (innermost side) opposite to the offset direction (toward the opening) of center B of the guide groove 2b by the elastic force F of the elastic pressing means 5 that is interposed between the outer circumferential surface 2a of the inner joint member 2 and the inner circumferential surface 4a of the cage 4 (cylindrical surface 4a1). Under the elastic force F of the elastic pressing means 5, the inner joint member 2 makes a relative displacement in the axial direction opposite to the offset direction (innermost side) thereby to press the balls 3 and stops at a position where the inner gap between the balls 3 and the guide grooves 1b, 2b of the inner and outer joint members 1, 2 disappears. As a result, a certain amount of preload F is applied in the axial direction to the balls 3, thus eliminating the rotation backlash (play in the circumferential direction).

While the split ring is used as the elastic pressing means 5, an integral ring having a shape similar to that shown in Fig.6 may also be used as long as a sufficient elastic force can be obtained. In this case, the elastic force required may be exerted by the elasticity of claws or a separate elastic ring 5" that complements the elasticity of claws 5b' of the integral ring 5' as shown in Fig.8 may be provided. The elastic ring 5" is, for example, a corrugated plate spring, a rubber ring or a resin ring. The elastic ring 5" may also be used together with the split ring 5 shown in Fig.6. or, alternatively, the elastic ring 5" may also be used together with a rigid ring (a ring which is not elastic) that makes contact with the outer circumferential surface 2a of the inner joint member 2. In this case, the elastic pressing means of the present invention consists of the combination of a pressing member (a member which is not elastic) that presses the outer circumferential surface of the inner joint member and an elastic member that applies an elastic force to the former member. The elastic pressing means of the present invention is not limited to ring shape and may be made of any material in any shape as long as the object of the present invention can be achieved.

By the first embodiment, the following effects can be obtained.
(1) The inner joint member makes a relative displacement in the axial direction opposite to the offset direction under the predetermined urging pressure of the elastic pressing means, thereby to press the balls, and applies a certain amount of preload in the axial direction to the balls. This eliminates the rotation backlash (play in the circumferential direction) of the joint. Also because the elastic pressing means has the spherical surface that fits and makes contact with the outer circumferential surface of the inner joint member, the surface pressure in the portion of contact between the outer circumferential surface of the inner joint member and the elastic pressing means is reduced and the outer circumferential surface of the inner joint member can be guided by the spherical surface.
(2) By making the ball track in such a configuration that is gradually reduced toward the opening side of the joint, and forming the cylindrical surface that fits with the outer circumferential surface of the inner joint member at least in the region on the opening side of the inner circumferential surface of the cage with the elastic pressing means being disposed on the cylindrical surface, it is made possible to assemble the inner joint member easily. Also because the inner joint member can be assembled after assembling the cage and the balls into the outer joint member, the inner joint member and the shaft can be integrated thereby reducing the number of parts and the number of assembling steps.
(3) Since it is not necessary to make an angular displacement of the inner joint member and the cage with respect to the outer joint member when assembling the balls, dimension of the guide grooves of the inner and outer joint members in the axial direction can be made smaller than those in the prior art and the size in the circumferential direction of the pocket of the cage can be made smaller than those in the prior art. Thus the joint can be made lighter in weight and smaller in size, and the strength (strength of cage) can be increased.
(4) By forming the region on the opening side of the inner circumferential surface of the outer joint member in a cylindrical surface that fits with the outer circumferential surface of the cage, it is made easier to assemble the cage into the outer joint member.

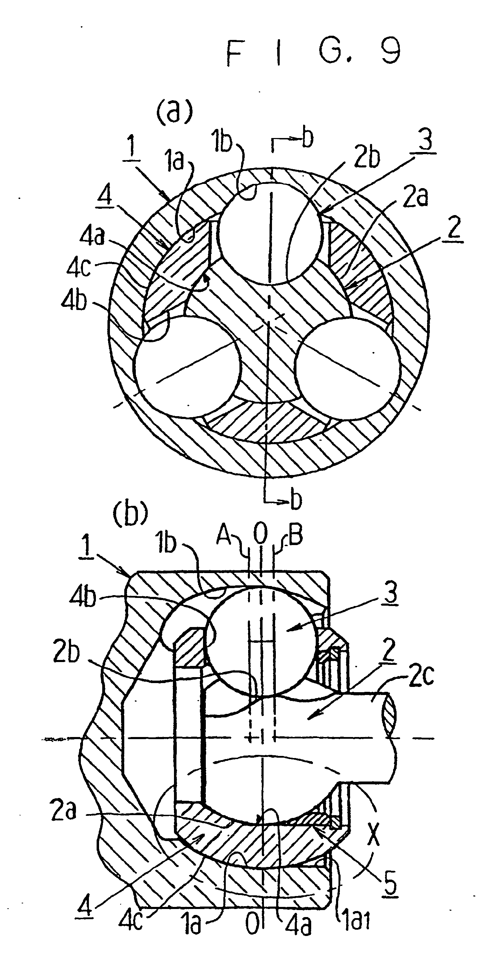

As shown in Fig.9, the constant velocity universal joint of second embodiment comprises an outer joint member 1 that has, for example, three curved guide grooves 1b formed in the axial direction on a spherical inner circumferential surface 1a thereof, an inner joint member 2 that has, for example, three curved guide grooves 2b formed in the axial direction on a spherical outer circumferential surface 2a thereof, for example, three balls 3 disposed in ball tracks that are formed by the coordination of the guide grooves 1b of the outer joint member 1and the guide grooves 2b of the inner joint member 2, a cage 4 that holds the balls 3, and a retaining member 5 interposed between the outer circumferential surface 2a of the inner joint member 2 and the inner circumferential surface 4a of the cage 4.

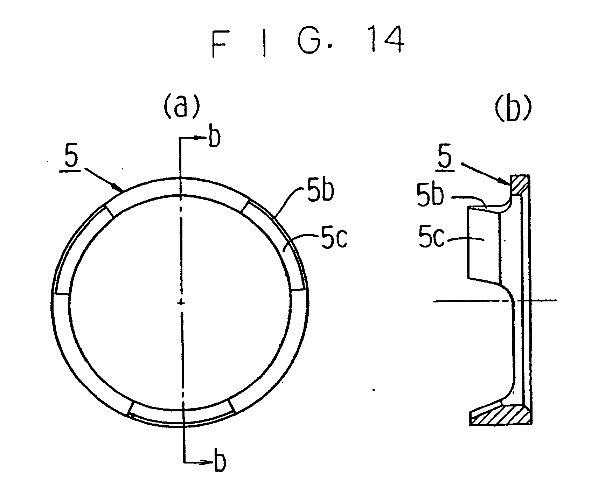

As shown in Fig.11, the outer joint member 1 has a cup shape that opens at one end thereof and is provided with either a shaft formed integrally therewith at the other end not shown or a separate shaft being bonded thereto by proper means. Center A of the guide groove 1b is offset by a predetermined distance in the axial direction (toward the innermost side of the joint in this embodiment) with respect to the center of curvature 0 of the inner circumferential surface 1a. A region on the opening side of the inner circumferential surface 1a is formed in a cylindrical surface 1a1. Inner radius D1 of the cylindrical surface 1a1 is set to such a value that is capable of enclosing the profile of the cage 4 shown in Fig. 13(a) in conjunction with a recess of the guide groove 1b of the outer joint member 1.

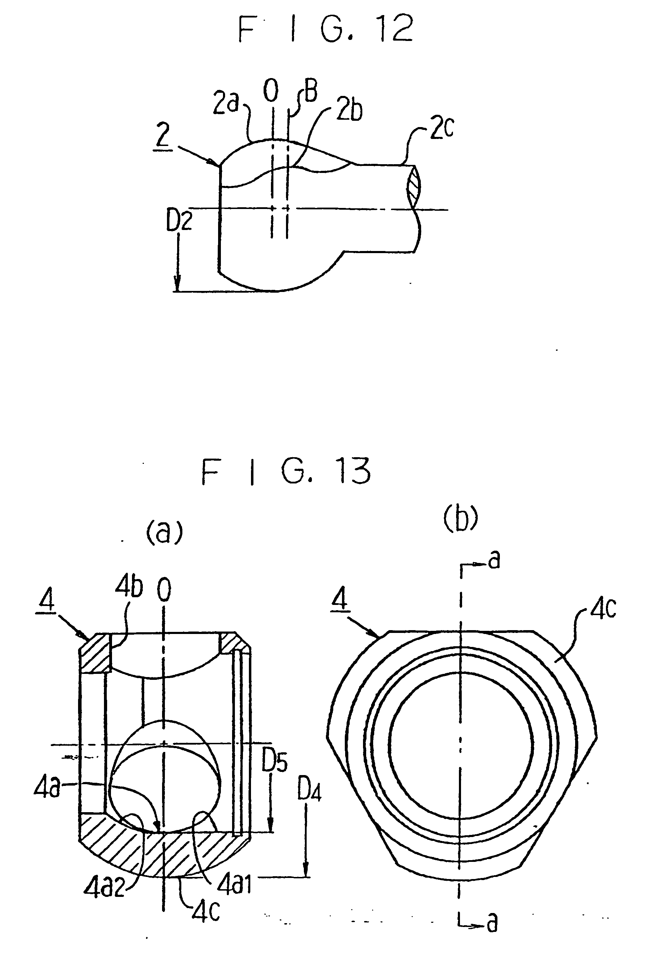

In this embodiment, as shown in Fig.12, the inner joint member 2 and the shaft 2c are formed as an integral part. This configuration is chosen to decrease the number of parts and the number of assembly steps. Center B of the guide groove 2b is offset by a predetermined distance in the axial direction (toward the opening side of the joint in this embodiment) with respect to the center of curvature O of the outer circumferential surface 2a. The offset distance of the guide groove 2b is the same as the offset distance of the guide groove 1b of the outer joint member 1, but is opposite in direction (the guide groove 1b being offset toward the innermost side, and the guide groove 2b being offset toward the opening side).

In this embodiment, as shown in Fig. 13, the cage 4 has three window-like pockets 4b that accommodate the balls 3. The inner circumferential surface 4a of the cage 4 has a region on the opening side which is formed in a cylindrical surface 4al and an innermost side region which is formed in a spherical surface 4a2 (center of curvature at O). Inner radius D5 of the cylindrical surface 4al is made equal to or larger than the outer radius D2 of the outer circumferential surface 2a of the inner joint member 2 (D5 ≧ D2). The innermost side region may also be formed in a conical surface or a cylindrical surface. The outer circumferential surface 4c of the cage 4 is a spherical surface (center of curvature at O) having radius D4. The cage 4 may be made of a metal, but may also be made of a resin in order to further reduce the weight and cost.

In this embodiment, a ring as shown in Fin.14 is adopted as the retaining member 5. The retaining member 5 is made of steel or the like, and has three claws 5b that protrude in the axial direction. End of each of the claws 5b is formed in a concave spherical surface 5c having the same radius of curvature as that of the outer circumferential surface 2a of the inner joint member 2. The retaining member 5 may also be made of a resin or the like.

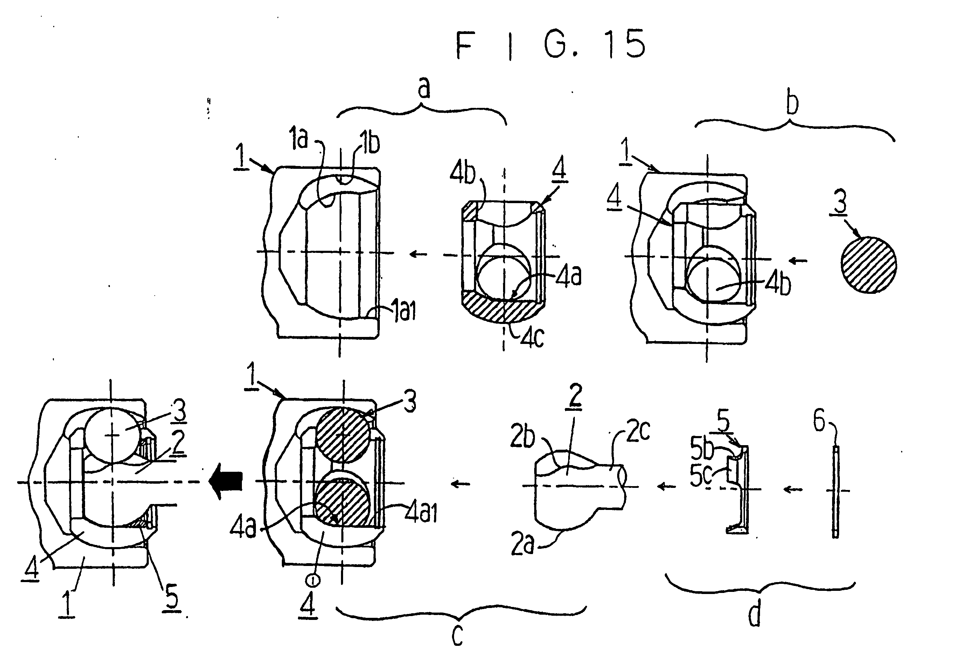

Fig. 15 shows the process of assembling the constant velocity universal joint of this embodiment. The assembling process comprises a step of assembling the cage 4 into the inner circumferential surface 1a of the outer joint member 1 (step a), a step of assembling the balls 3 into the pocket 4b of the cage 4 (step b), a step of assembling the inner joint member 2 into the inner circumferential surface 4a of the cage 4 (step c) and a step of assembling the retaining member 5 into the inner circumferential surface 4a (cylindrical surface 4al) of the cage 4 and securing with a retainer ring 6 to prevent the assembly from coming off (step d).

In the assembling step a, since the opening side region of the inner circumferential surface 1a of the outer joint member 1 has the cylindrical surface 1a1 that can enclose the profile of the cage 4 shown in Fig. 13(a), the cage 4 can be assembled into the outer joint member 1.

In the assembling step b, the balls 3 can be assembled into the pocket 4b directly from the inner circumferential side of the cage 4. As a result, it is made easier to assemble the balls 3 compared to the prior art process. Also because it is not necessary to make an angular displacement of the inner joint member 2 and the cage 4 with respect to the outer joint member 1 when assembling the balls 3, it is made possible to make the dimensions in the axial direction of the guide grooves 1b, 2b of the inner and outer joint members 1, 2 smaller than those of the prior art and make the dimension of the pocket 4b of the cage 4 in the circumferential direction thereof smaller than that of the prior art. Consequently, the joint can be made lighter in weight and smaller in size, and the strength thereof (strength of cage) can be increased.

In the assembling step c, since the opening side region of the inner circumferential surface 4a of the cage 4 has the cylindrical surface 4al having radius D5 (≧ D2) and the center B of the guide groove 2b of the inner joint member 2 is offset toward the opening side, thus the inner joint member 2 can be assembled into the inner circumferential surface 4a of the cage 4 and the balls 3 by advancing the inner joint member 2 in the axial direction under such a state that the axis of the inner joint member 2 is aligned with the axes of the cage 4 and the outer joint member 1. Thus it is made easier to assemble the inner joint member 2 than in the case of the prior art process. Also because the inner joint member 2 can be assembled after assembling the cage 4 and the balls 3 into the outer joint member 1, thus integrating the shaft 2c with the inner joint member 2 does not cause any difficulty in assembling.

In the assembling step d, the retaining member 5 is assembled into the inner circumferential surface 4a (cylindrical surface 4al) of the cage 4, and the spherical portion 5c thereof is fitted with the outer circumferential surface 2a of the inner joint member 2, with the retainer ring 6 applied to prevent the assembly from coming off. Instead of using the retainer ring 6, the retaining member 5 may also be secured to prevent it from coming off by such means as caulking the retaining member 5 onto the cylindrical surface 4al of the cage 4, bonding (welding, etc.) and fitting engagement (for example, a projection provided on the retaining member 5 is fitted in an engagement groove formed in the cylindrical surface 4al of the cage 4).

When the outer joint member 1, the inner joint member 2, the balls 3, the cage 4, and the retaining member 5 have been assembled in the configuration described above, the constant velocity universal joint of this embodiment shown in Fig.9 is completed. Center A of the guide groove 1b of the outer joint member 1 and center B of the guide groove 2b of the inner joint member 2 are offset on the opposite sides to each other (center A is offset toward the innermost side of the joint and center B is offset toward the opening of the joint) in the axial direction by the same distances with respect to the center plane O of the joint that includes the centers of the balls 3. Thus the ball tracks formed by the coordination of the guide grooves 1b and the guide grooves 2b has a wedge shape that expands toward the innermost side and gradually reduces toward the opening.

As shown in Fin.10 (enlarged view of portion X of Fig.9), the inner joint member 2 assembled into the inner circumferential surface 4a of the cage 4 is retained and held in place by the retaining member 5. The outer circumferential surface 2a of the inner joint member 2 is guided by the spherical surface 4a2 of the cage 4 and the spherical portion 5c of the retaining member 5 during angular displacement of the joint.

While an integral ring is used as the retaining member in this embodiment, a split ring (split at one position or at a plurality of positions) having a shape similar to that shown in Fig.14 may also be used as long as the required force of retention can be obtained. The retaining member may also be pressed toward the inner joint member by an elastic member such as a corrugated plate spring, a rubber ring or a resin ring. Moreover, the retaining member of the present invention is not limited to a ring shape and may be made of any material in any shape as long as the object of the present invention can be achieved.

By the second embodiment, the following effects can be obtained.
(1) The inner joint member can be assembled more easily by providing the cylindrical surface, that fits the outer circumferential surface of the inner joint member, in at least the opening side region of the inner circumferential surface of the cage, and disposing the retaining member on the cylindrical surface. Also because the inner joint member can be assembled after assembling the cage and the balls into the outer joint member, it is made possible to integrate the shaft with the inner joint member and reduce the number of parts and the number of assembly steps. Further, because the retaining member has the spherical surface that makes fitting contact with the outer circumferential surface of the inner joint member, the outer circumferential surface of the inner joint member can be guided by the spherical surface.
(2) Since it is not necessary to make an angular displacement of the inner joint member and the cage with respect to the outer joint member when assembling the balls, dimensions of the guide grooves of the inner and outer joint members in the axial direction can be made smaller than those in the prior art and the size in the circumferential direction of the pocket of the cage can be made smaller than that in the prior art. Thus the joint can be made lighter in weight and smaller in size, and the strength (strength of cage) can be increased.
(3) By forming the region on the opening side of the inner circumferential surface of the outer joint member in a cylindrical surface that fits with the outer circumferential surface of the cage, it is made easier to assemble the cage into the outer joint member.

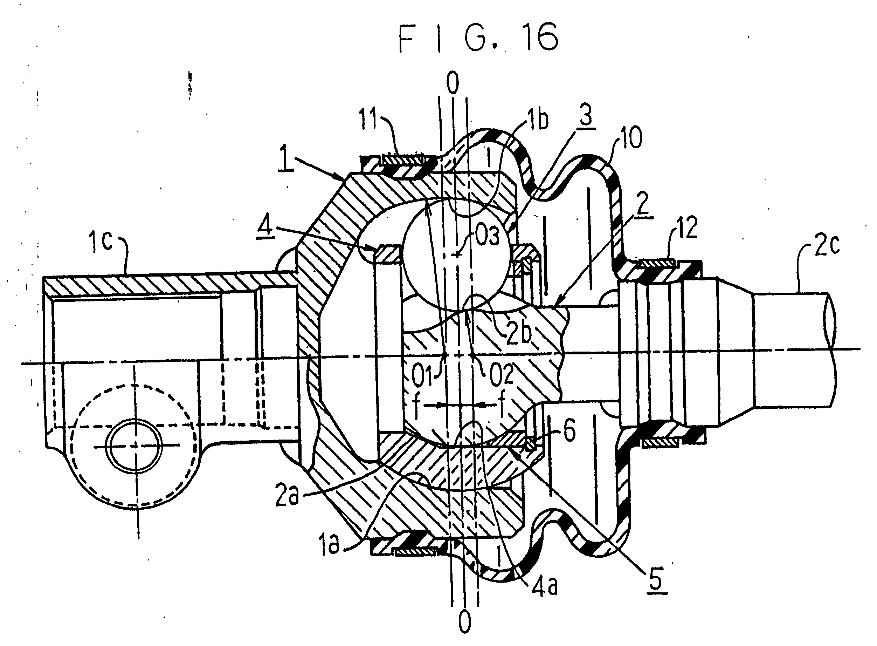

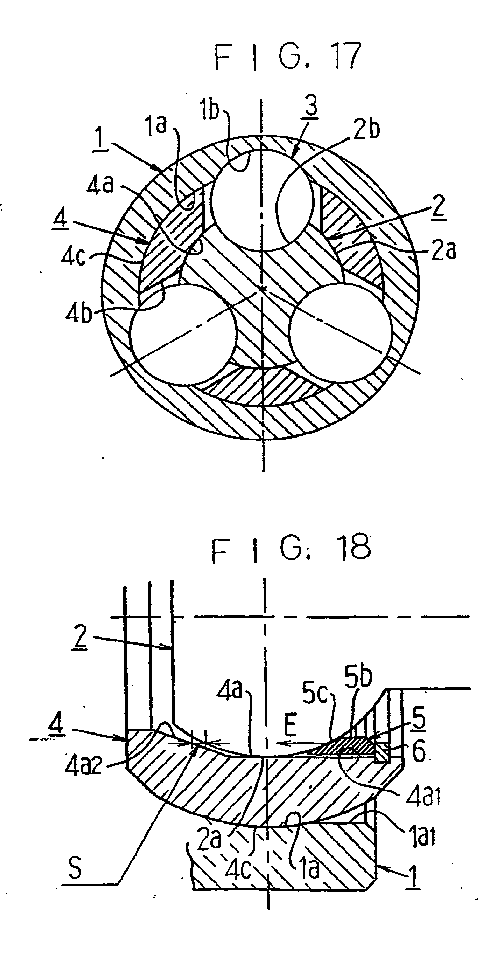

The constant velocity universal joint of third embodiment shown in Fig. 16 and Fig. 17 connects an intermediate shaft (22) and a gear shaft (24) of a steering gear (23) to be capable of freely making angular displacement in, for example, an automobile steering apparatus shown in Fig. 34.

The constant velocity universal joint of this embodiment comprises an outer joint member 1 that has, for example, three curved guide grooves 1b formed in the axial direction on a spherical inner circumferential surface 1a thereof, an inner joint member 2 that has, for example, three curved guide grooves 2b formed in the axial direction on a spherical outer circumferential surface 2a thereof, for example, three torque transmitting balls 3 disposed in ball tracks that are formed by the coordination of the guide grooves 1b of the outer joint member 1 and the guide grooves 2b of the inner joint member 2 that oppose the former, a cage 4 that holds the torque transmitting balls 3, and an elastic member 5 interposed between the outer circumferential surface 2a of the inner joint member 2 and the inner circumferential surface 4a of the cage 4.

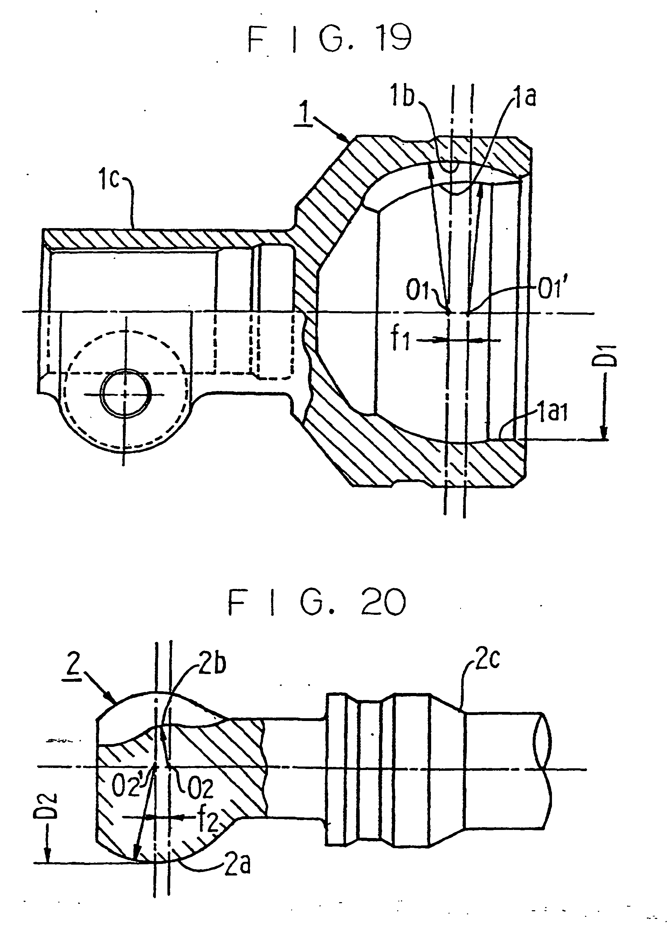

As shown in Fig.19, the outer joint member 1 of this embodiment has a cup shape that opens at one end thereof and is provided with a yoke 1c formed integrally therewith at the other end thereof for connecting a gear shaft (for example, a pinion shaft) of a steering gear (for example, a rack and pinion type steering gear). By integrally forming the outer joint member 1 and the yoke 1c, it is made possible to reduce the number of manufacturing processes, the number of parts and the number of assembly steps and reduce the cost. Concentricity of both members can also be ensured.

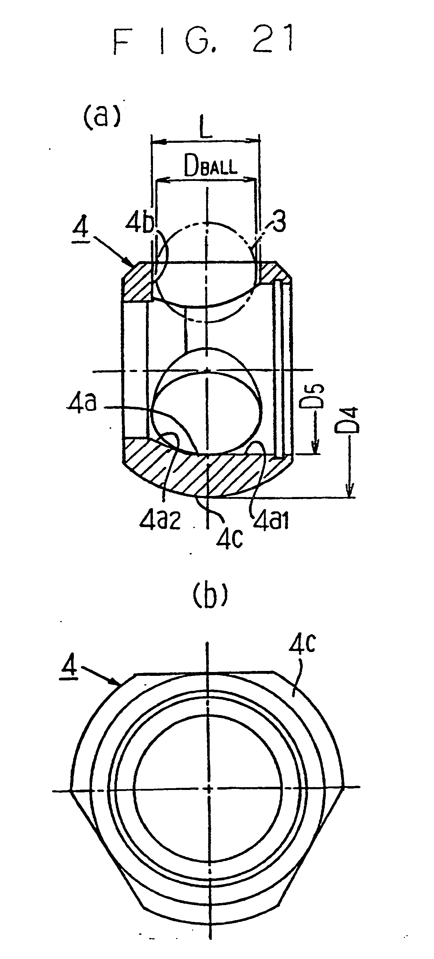

The center of curvature O1 of the guide groove 1b is offset by the predetermined distance f1 from the center of curvature O1' of the spherical inner circumferential surface 1a to one side (toward the innermost side of the joint in this embodiment) in the axial direction. A region on the opening side of the inner circumferential surface 1a is formed in a cylindrical surface 1a1. Inner radius D1 of the cylindrical surface 1a1 is set to such a value that is capable of enclosing the outer diameter of the cage 4 (direction shown in Fig.21(a)) to be described later.

The outer joint member 1 is preformed roughly to a predetermined shape from steel in hot forging or semi-hot forging process, while the inner circumferential surface 1a and the guide groove 1b are formed in cold forging process. While the inner circumferential surface 1a is further subjected to a post process (grinding process or the like) to ensure accuracy, the cold forging process described above may be regarded as the final finishing process for the guide groove 1b. In this case, surface of the guide groove 1b constitutes the surface of the final product that has been formed by cold forging. Since this makes the post processing (grinding, etc.) of the guide groove unnecessary, manufacturing cost for the outer joint member is reduced in comparison to the prior art.

In this embodiment, as shown in Fig.20, the inner joint member 2 has the shaft 2c that serves also as the intermediate shaft (22: refer to Fig.34) being integrally formed therewith. Forming the shaft 2c integrally with the inner joint member 2 makes it possible to reduce the number of manufacturing processes, the number of parts and the number of assembly steps and reduce the cost.

The center of curvature O2 of the guide groove 2b is offset by a predetermined distance f2 from the center of curvature O2' of the spherical outer circumferential surface 2a to the other side (toward the opening of the joint in this embodiment) in the axial direction. Direction of offset of the guide groove 2b is opposite to that of the guide groove 1b of the outer joint member 1 (the guide groove 1b is offset toward the innermost side, and the guide groove 2b is offset toward the opening). In this embodiment, the offset distance f2 of the guide groove 2b is set to be smaller than the offset distance f1 of the guide groove 1b of the outer joint member 1 by a predetermined amount (f1>f2).

The inner joint member 2 is preformed roughly to a predetermined shape from steel in, for example, hot forging or semi-hot forging process, while the outer circumferential surface 2a and the guide groove 2b are formed in cold forging process. While the outer circumferential surface 2a is subjected to a post process (grinding process or the like) to ensure accuracy, the cold forging process described above may be regarded as the final finishing process for the guide groove 2b. In this case, surface of the guide groove 2b makes the surface of the final product that has been formed by cold forging. Since this makes the post processing (grinding, etc.) of the guide groove unnecessary, manufacturing cost of the inner joint member is reduced in comparison to the prior art.

In this embodiment, as shown in Fig.21, the cage 4 has three window-like pockets 4b that accommodate the torque transmitting balls 3. The inner circumferential surface 4a of the cage 4 has a region on the opening side that is formed in a cylindrical surface 4al and an innermost side region formed in a conical surface 4a2. Inner radius D5 of the cylindrical surface 4al is made larger than the outer radius D2 of the outer circumferential surface 2a of the inner joint member 2 (D5>D2). The innermost side region may also be formed in a spherical surface or a cylindrical surface. The outer circumferential surface 4c of the cage 4 is a spherical surface having radius D4. The cage 4 may be made of a metal, but may also be made of a resin in order to further reduce the weight and cost.

In this embodiment, dimension L in the axial direction of the pocket 4b of the cage 4 is equal to or greater than diameter D_{BALL} of the torque transmitting balls 3 accommodated therein (L ≧ D_{BALL}) . Clearance δ (=L-D_{BALL}) of the pocket in the axial direction between the pocket 4b and the torque transmitting balls 3 may be set, for example, in a range of 0 ≦ d ≦ 55 µm. This setting makes it possible to reduce the resistance to the rotation when the joint transmits the rotation torque while taking a certain operating angle and prevent the joint from losing the constant velocity characteristics, thereby to achieve good feel of rotation (smoothness of rotation).

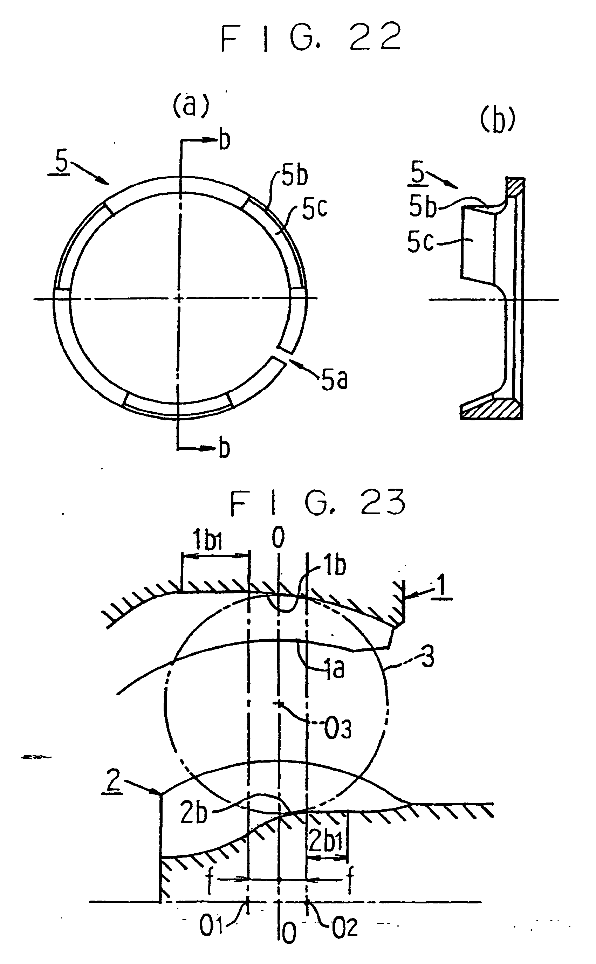

In this embodiment, a split ring that can increase and decrease the diameter thereof as shown in Fig.22 is adopted as the elastic member 5. The elastic member 5 is made of spring steel or the like, and has one opening 5a and three claws 5b that protrude in the axial direction. End of each of the claws 5b is formed in a concave spherical surface 5c having the same radius of curvature as that of the outer circumferential surface 2a of the inner joint member 2. The elastic member 5 may also be made of an elastic material such as resin or rubber. The elastic member 5 may also be made in an integral ring without the split gap 5a. In this case, the elastic force required may be provided by the elasticity of the claws (5b), or by the combined use of an elastic ring such as a corrugated plate spring, a rubber ring or a resin ring. Further, the end portion (5c) of the claw (5b) may be formed in such a shape that makes linear contact with the outer circumferential surface 2a of the inner joint member 2, for example a conical shape (conical surface).

The constant velocity universal joint of this embodiment is assembled through a step of assembling the cage 4 into the inner circumferential surface 1a of the outer joint member 1, a step of assembling the torque transmitting balls 3 into the pocket 4b of the cage 4, a step of assembling the inner joint member 2 into the inner circumferential surface 4a of the cage 4, and a step of assembling the elastic member 5 into the inner circumferential surface 4a (cylindrical surface 4al) of the cage 4 and securing with a retainer ring 6 to prevent the assembly from coming off. Since the region on the opening side of the inner circumferential surface 1a of the outer joint member 1 has the cylindrical surface 1a1 that can enclose the profile of the cage 4 (direction shown in Fig. 21(a)), the cage 4 can be easily assembled into the outer joint member 1. Also the torque transmitting balls 3 can be assembled into the pocket 4b directly from the inner circumferential side of the cage 4. Moreover, since the region on the opening side of the inner circumferential surface 4a of the cage 4 has the cylindrical surface 4al having radius D5 (>D2) and the center of curvature O2 of the guide groove 2b of the inner joint member 2 is offset toward the opening side, the inner joint member 2 can be assembled into the inner circumferential surface 4a of the cage 4 and the torque transmitting balls 3 by advancing the inner joint member 2 in the axial direction under such a state that the axis of the inner joint member 2 is aligned with the axes of the cage 4 and the outer joint member 1. The elastic member 5 is assembled into the inner circumferential surface 4a (cylindrical surface 4al) of the cage 4, and the outer circumferential surface 2a of the inner joint member 2 is pressed toward the inside of the joint in the axial direction by the spherical portion (or conical portion) 5c of the elastic member 5, with the retainer ring 6 applied for retention. Instead of using the retainer ring 6, the elastic member 5 may also be secured to prevent it from coming off by such means as caulking the elastic member 5 onto the cylindrical surface 4al of the cage 4, bonding (welding, etc.) and fitting engagement (for example, a projection provided on the elastic member 5 is fitted in an engagement groove formed in the cylindrical surface 4al of the cage 4).

When the outer joint member 1, the inner joint member 2, the torque transmitting balls 3, the cage 4, and the elastic member 5 have been assembled in the configuration described above, the constant velocity universal joint of this embodiment shown in Fig. 16 and Fig. 17 is completed. A boot 10 is applied on the outer circumference of the outer joint member 1 and on the outer circumference of the shaft 2c of the inner joint member 2, and is clamped by means of boot bands 11, 12.

As shown in an enlarged view of Fig.18, a clearance S is provided in the axial direction between the inner circumferential surface 4a (conical surface 4a2) of the cage 4 and the outer circumferential surface 2a of the inner joint member 2, thereby to allow a relative displacement of the inner joint member 2 in the axial direction with respect to the cage 4 (and the outer joint member 1). The axial clearance S and the elastic member 5 constitute the preloading means.

Elastic force E of the elastic member 5, that is interposed between the outer circumferential surface 2a of the inner joint member 2 and the inner circumferential surface 4a (cylindrical surface 4al) of the cage 4, presses the outer circumferential surface 2a of the inner joint member 2 in the direction (toward the innermost side of the joint) opposite to the direction (toward the opening of the joint) of offset of the center of curvature O2 of the guide groove 2b. Under the pressing force E of the elastic member 5, the inner joint member 2 undergoes a relative displacement in the axial direction in the direction (toward the innermost side of the joint) opposite to the direction of offset of the center of curvature O2, thereby to press the torque transmitting balls 3, and stops at a position where the clearance between the torque transmitting balls 3 and the guide grooves 1b, 2b of the outer and inner joint members 1, 2 disappears. As a result, a certain amount of preload E is applied in the axial direction to the torque transmitting balls 3, thus eliminating the rotation backlash (play in the circumferential direction).

In this embodiment, as described previously, the offset distance f1 (offset with respect to the center of curvature O1') of the guide groove 1b of the outer joint member 1 is set to be larger than the offset distance f2 (offset with respect to the center of curvature O2') of the guide groove 2b of the inner joint member 2 by a predetermined amount (f1>f2).Consequently, in the state after assembly shown in Fig. 16 (state where the inner clearance is reduced by the preloading means), center of curvature O1 of the guide groove 1b of the outer joint member 1 and center of curvature O2 of the guide groove 2b of the inner joint member 2 are offset on the opposite sides to each other (center of curvature O1 is offset toward the innermost side of the joint and center of curvature O2 is offset toward the opening of the joint) in the axial direction by the same distances f with respect to the center plane O of the joint that includes the centers 03 of the torque transmitting balls 3. Specifically, assuming the state before the clearance is reduced by the preloading means, the torque transmitting balls 3 have a predetermined amount of play (inner clearance) toward the expanding side of the ball track, namely in the direction of offset of the center of curvature O1 (direction of approaching the center of curvature O1: direction in which the offset distance f1 apparently decreases) with respect to the guide groove 1b, and in the direction opposite to the offset of the center of curvature O2 (direction of departing from the center of curvature O2: direction in which the offset distance f2 apparently increases) with respect to the guide groove 2b, taking reference to a position where the balls make contact with both the guide groove 1b and the guide groove 2b (position where there is no inner clearance). Therefore, by setting the offset distance f1 larger than the offset distance f2 by a predetermined amount (f1>f2), it is made possible to cancel the variations of the center of curvature O1 and/or the center of curvature O2 with respect to the center plane O of the joint in the preloading process so that, when the inner clearance is reduced by the preloading means, the center of curvature O1 and the center of curvature O2 are offset to the opposite sides by the same distances f in the axial direction with respect to the center plane O of the joint. Thus the ball tracks formed by the coordination of the guide grooves 1b and the guide grooves 2b are formed in a wedge shape that gradually reduces toward the other side (opening side) in the axial direction. When the outer joint member 1 and the inner joint member 2 make an angular displacement of θ , the torque transmitting balls 3 which are guided by the cage 4 are always held in the bisecting plane (θ/2) of the angle θ regardless of the value of the operating angle θ. As a result, constant velocity characteristics of the joint can be ensured and good feel of rotation (smoothness of rotation) is achieved.

Fig.23 shows a modification of the third embodiment. In this embodiment, the guide grooves 1b of the outer joint member 1 and the guide grooves 2b of the inner joint member 2 have regions 1b1, 2bl that are free of undercut being provided thereon. For example, the region 1b1 is provided in the joint on the innermost side of the center line O1 of the guide groove 1b and is parallel to the center line of the outer joint member 1. The region 2bl is provided in the joint on the opening side of the center line O2 of the guide groove 2b and is parallel to the center line of the inner joint member 2. By providing the regions 1b1, 2b1 that are free of undercut, the operating angle of the joint can be increased.

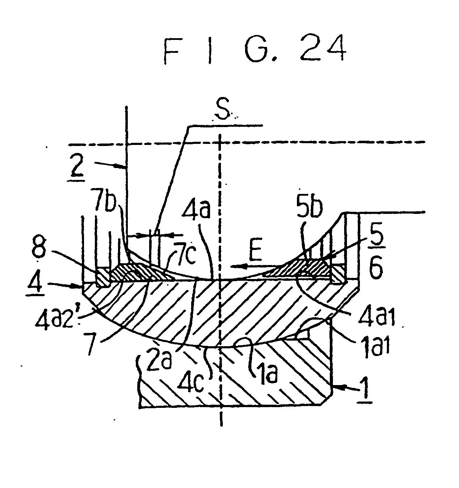

Fig. 24 shows another modification of the third embodiment of the present invention. In this embodiment, the entire region of the inner circumferential surface 4a of the cage 4 is formed in a cylindrical surface, and the elastic member 5 is mounted in the opening side region 4al of the inner circumferential surface 4a while an auxiliary ring 7 is mounted in the innermost side region 4a2' of the inner circumferential surface 4a. The auxiliary ring 7 is, for example, an integral ring that has claws 7b and spherical portions (or conical portions) 7c similarly to the elastic member 5 described previously, and is fitted in the innermost side region 4a2' and fastened by a retainer ring 8. The clearance S is provided in the axial direction between the spherical surface (or conical surface) 7c of the auxiliary ring 7 and the outer circumferential surface 2a of the inner joint member 2. The clearance S of the axial direction and the elastic member 5 constitute the preloading means. This constitution has an advantage that the configuration of the cage 4 can be mode simpler than in the embodiment described above.

In the automotive steering apparatus shown in Fig. 34, a constant velocity universal joint similar to that of the embodiments described above may be used as a universal joint (28) that connects the main shaft (21) and the intermediate shaft (22) while allowing it to make angular displacement freely.

By the third embodiment, the following effects can be obtained.
(1) Since the preloading means is provided to reduce the clearance between the torque transmitting balls and the ball track, rotation backlash (play in the circumferential direction) does not take place.
(2) When the clearance is reduced by the preloading means, the center of curvature of the guide groove of the outer joint member and the center of curvature of the guide groove of the inner joint member are offset on the opposite sides to each other in the axial direction by the same distances with respect to the center plane of the joint that includes the centers of the torque transmitting balls, and consequently constant velocity characteristics of the joint is maintained and good feel of rotation (smoothness of rotation) can be achieved.
(3) The operating angle of the joint can be increased by providing the regions free of undercut in the guide grooves of the outer joint member and the inner joint member.
(4) It is made easier to assemble the cage into the outer joint member by forming the region on the opening side of the inner circumferential surface of the outer joint member in a cylindrical surface that fits onto the outer circumferential surface of the cage.
(5) The constant velocity universal joint of the present invention is light in weight, small in size and low cost, and rotates smoothly without backlash while being capable of taking a large operating angle, and therefore contributes to the improvements in performance such as the stability of steering and feel of steering and in the freedom of designing the layout of vehicle components when used in the steering apparatus of automobile.

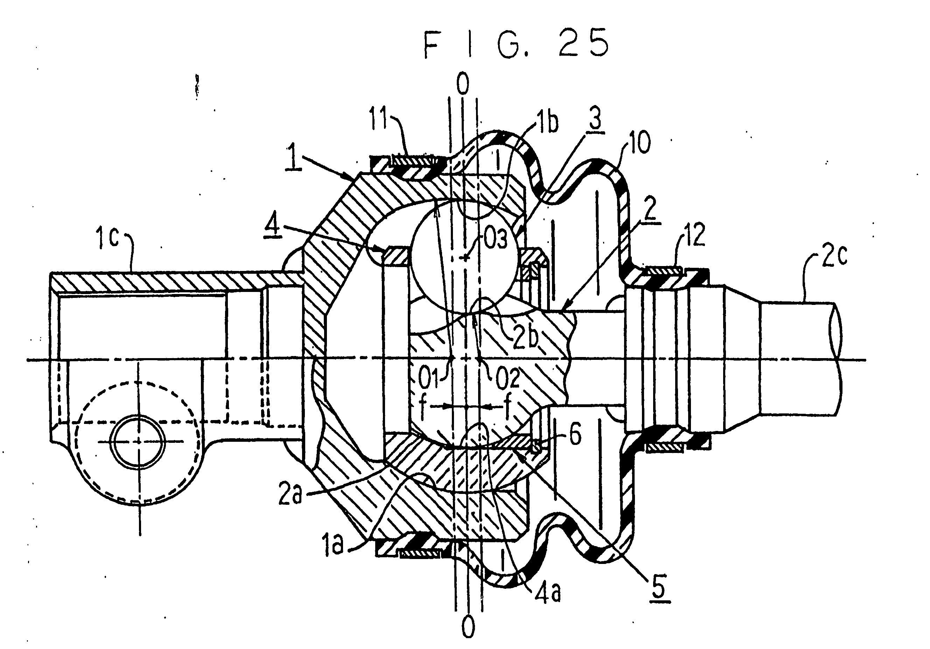

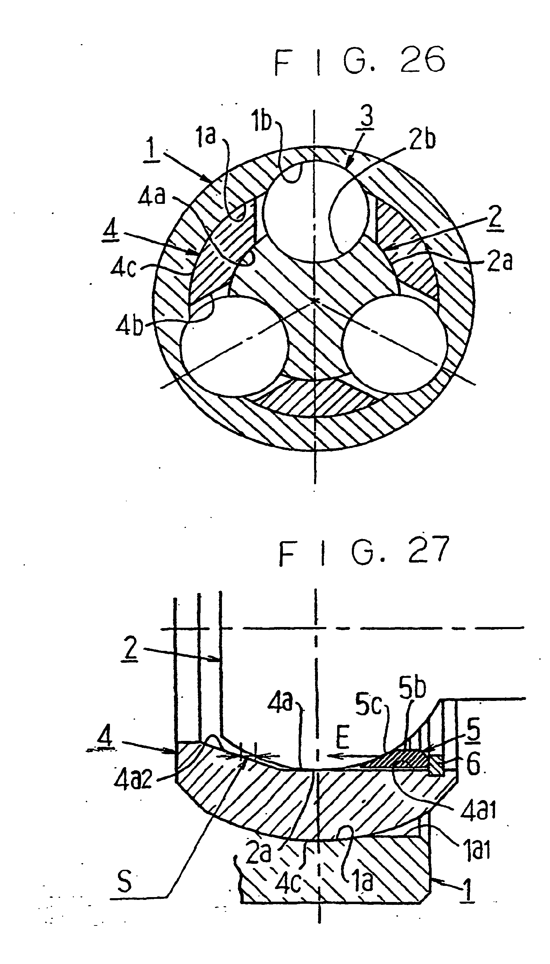

The constant velocity universal joint of the fourth embodiment shown in Fig. 25 and Fig. 26 connects an intermediate shaft (22) and a gear shaft (24) of a steering gear (23) to be capable of freely making an angular displacement in, for example, an automobile steering apparatus shown in Fig. 34.

The constant velocity universal joint of this embodiment comprises an outer joint member 1 that has, for example, three curved guide grooves 1b formed in the axial direction on a spherical inner circumferential surface 1a thereof, an inner joint member 2 that has, for example, three curved guide grooves 2b formed in the axial direction on a spherical outer circumferential surface 2a thereof, for example, three torque transmitting balls 3 disposed in ball tracks that are formed by the coordination of the guide grooves 1b of the outer joint member 1 and the guide grooves 2b of the inner joint member 2 that oppose the former, a cage 4 that holds the torque transmitting balls 3 and an elastic member 5 interposed between the outer circumferential surface 2a of the inner joint member 2 and the inner circumferential surface 4a of the cage 4.

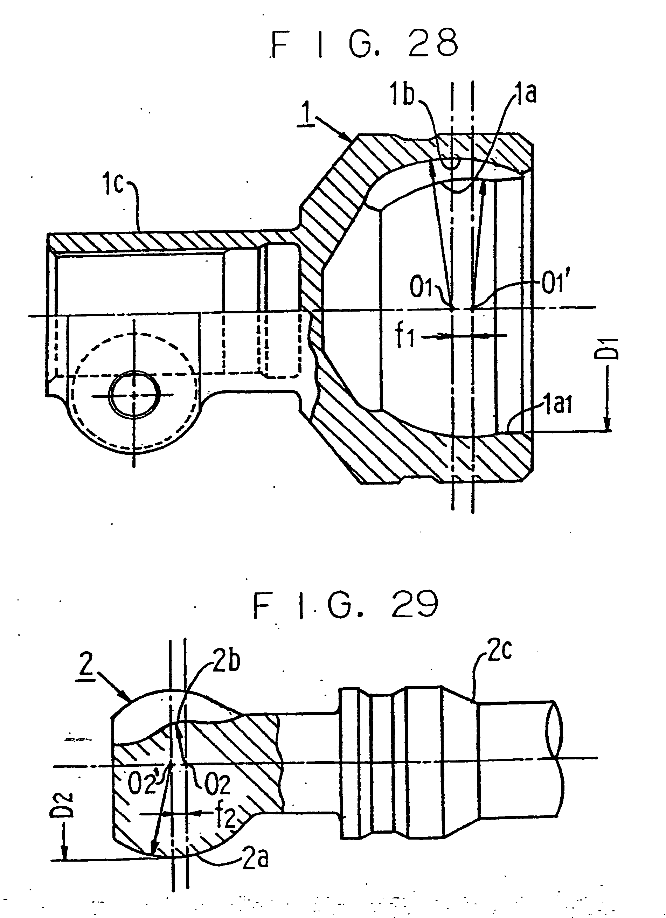

In this embodiment, as shown in Fig.28, the outer joint member 1 has a cup shape that opens at one end thereof and is provided with a yoke 1c formed integrally therewith at the other end thereof for connecting a gear shaft (for example, a pinion shaft) of a steering gear (for example, a rack and pinion type steering gear). By integrally forming the outer joint member 1 and the yoke 1c, it is made possible to reduce the number of manufacturing processes, the number of parts and the number of assembly steps and reduce the cost. Concentricity of both members can also be ensured.

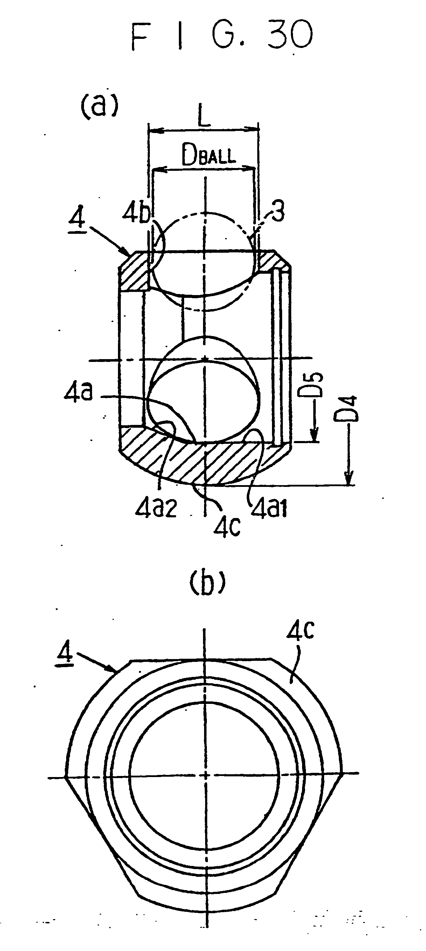

The center of curvature O1 of the guide groove 1b is offset by a predetermined distance f1 from the center of curvature O1' of the inner circumferential surface 1a in the axial direction (toward the innermost side of the joint in this embodiment). A region on the opening side of the inner circumferential surface 1a is formed in a cylindrical surface 1a1. Inner radius D1 of the cylindrical surface 1a1 is set to such a value that is capable of enclosing the outer diameter of the cage 4 (direction shown in Fig.30(a)) to be described later.

The outer joint member 1 is preformed roughly to a predetermined shape from, for example, steel in hot forging or semi-hot forging process, while the inner circumferential surface 1a and the guide groove 1b are formed in cold forging process. While the inner circumferential surface 1a is further subjected to a post process (grinding or the like) to ensure accuracy, the cold forging process described above may be regarded as the final finishing process with regards to the guide groove 1b. In this case, surface of the guide groove 1b constitutes the surface of the final product that has been formed by cold forging. Since this makes the post processing (grinding, etc.) of the guide groove unnecessary, manufacturing cost for the outer joint member is reduced in comparison to the prior art.

In this embodiment, as shown in Fig.29, the inner joint member 2 has the shaft portion 2c that serves also as the intermediate shaft (22: refer to Fig.34) being integrally formed therewith. Formed on one end (not shown) of the shaft portion 2c is, for example, a connecting portion that is connected to the outer joint member (having the yoke integrally formed therewith) of the constant velocity universal joint (having the same constitution as that of the constant velocity universal joint according to the present embodiment) on the steering wheel side (connected to the yoke). Forming the shaft portion 2c integrally with the inner joint member 2 makes it possible to reduce the number of manufacturing processes, the number of parts and the number of assembly steps and reduce the cost.

The center of curvature O2 of the guide groove 2b is offset by a predetermined distance f2 from the center of curvature O2' of the outer circumferential surface 2a in the axial direction (toward the opening side of the joint in this embodiment). Direction of offset of the guide groove 2b is opposite to that of the guide groove 1b of the outer joint member 1 (the guide groove 1b is offset toward the innermost side, and the guide groove 2b is offset toward the opening).

The inner joint member 2 is preformed roughly to a predetermined shape from, for example, steel in hot forging or semi-hot forging process, while the outer circumferential surface 2a and the guide groove 2b are formed in cold forging process. While the outer circumferential surface 2a is subjected to a post process (grinding process or the like) to ensure accuracy, the cold forging process described above may be regarded as the final finishing process for the guide groove 2b. In this case, surface of the guide groove 2b constitutes the surface of the final product that has been formed by cold forging. Since this makes the post processing (grinding, etc.) of the guide groove unnecessary, manufacturing cost of the inner joint member is reduced in comparison to the prior art.

In this embodiment, as shown in Fig.30, the cage 4 has three window-like pockets 4b that accommodate the torque transmitting balls 3. The inner circumferential surface 4a of the cage 4 has a region on the opening side that is formed in a cylindrical surface 4al and an innermost side region formed in a conical surface 4a2. Inner radius D5 of the cylindrical surface 4al is made larger than the radius D2 of the outer circumferential surface 2a of the inner joint member 2 (DS>D2). The inner region may also be formed in a spherical surface or a cylindrical surface. The outer circumferential surface 4c of the cage 4 is a spherical surface having radius D4. The cage 4 may be made of a metal, but may also be made of a resin in order to further reduce the weight and cost.

The dimension L in the axial direction of the pocket 4b of the cage 4 is equal to or greater than diameter D_{BALL} of the torque transmitting balls 3 accommodated therein (L ≧ D_{BALL}). Clearance δ of the pocket (=L-D_{BALL}) in the axial direction between the pocket 4b and the torque transmitting balls 3 is set in a range of 0 ≦ δ ≦ 55 *µ*m for the reason described previously.

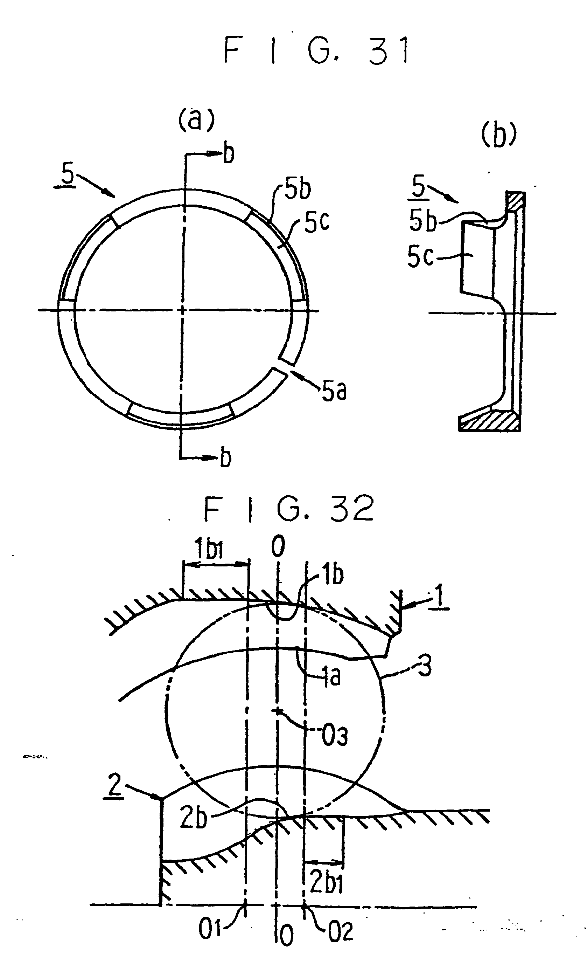

In this embodiment, a split ring that can increase and decrease the diameter thereof as shown in Fig.31 is adopted as the elastic member 5. The elastic member 5 is made of spring steel or the like, and has one opening 5a and three claws 5b that protrude in the axial direction. End of each of the claws 5b is formed in a concave spherical surface 5c having the same radius of curvature as that of the outer circumferential surface 2a of the inner joint member 2. The elastic member 5 may also be made of an elastic material such as resin or rubber. The elastic member 5 may also be made in an integral ring without the opening 5a. In this case, the elastic force required may be provided by the elasticity of the claws (5b), or by the combined use of an elastic ring such as a corrugated plate spring, a rubber ring or a resin ring. Further, the end portion (5c) of the claw (5b) may be formed in such a shape that makes linear contact with the outer circumferential surface 2a of the inner joint member 2, for example a conical shape (conical surface).

The constant velocity universal joint of this embodiment is assembled through a step of assembling the cage 4 into the inner circumferential surface 1a of the outer joint member 1, a step of assembling the torque transmitting balls 3 into the pocket 4b of the cage 4, a step of assembling the inner joint member 2 into the inner circumferential surface 4a of the cage 4, and a step of assembling the elastic member 5 into the inner circumferential surface 4a (cylindrical surface 4al) of the cage 4 and securing with a retainer ring 6 to prevent the assembly from coming off. Since the region on the opening side of the inner circumferential surface 1a of the outer joint member 1 has the cylindrical surface 1a1 that can enclose the outer diameter of the cage 4 (direction shown in Fig.30(a)), the cage 4 can be easily assembled into the outer joint member 1. Also the torque transmitting balls 3 can be assembled into the pocket 4b directly from the inner circumferential side of the cage 4. Moreover, since the region on the opening side of the inner circumferential surface 4a of the cage 4 has the cylindrical surface 4al having radius D5 (>D2) and the center O2 of the guide groove 2b of the inner joint member 2 is offset toward the opening side, the inner joint member 2 can be assembled into the inner circumferential surface 4a of the cage 4 and the torque transmitting balls 3 by advancing the inner joint member 2 in the axial direction under such a state that the axis of the inner joint member 2 is aligned with the center axes of the cage 4 and the outer joint member 1. The elastic member 5 is assembled into the inner circumferential surface 4a (cylindrical surface 4al) of the cage 4, and the outer circumferential surface 2a of the inner joint member 2 is pressed toward the innermost side of the joint in the axial direction by the spherical portion (or conical portion) 5c of the elastic member 5, with the retainer ring 6 applied for retention. Instead of using the retainer ring 6, the elastic member 5 may also be secured to prevent it from coming off by such means as caulking the elastic member 5 onto the cylindrical surface 4al of the cage 4, bonding (welding, etc.) and fitting engagement (for example, a projection provided on the elastic member 5 is fitted in an engagement groove formed in the cylindrical surface 4al of the cage 4).

When the outer joint member 1, the inner joint member 2, the torque transmitting balls 3, the cage 4, and the elastic member 5 have been assembled in the configuration described above, the constant velocity universal joint of this embodiment shown in Fig. 25 and Fig. 26 is completed. The center O1 of the guide groove 1b of the outer joint member 1 and center O2 of the guide groove 2b of the inner joint member 2 are offset on the opposite sides to each other (center O1 is offset toward the inside of the joint, and center O2 is offset toward the opening of the joint) in the axial direction by the same distances f with respect to the center plane O of the joint that includes the centers 03 of the torque transmitting balls 3. Thus the ball track formed by the coordination of the guide groove 1b and the guide groove 2b has a wedge-like shape that expands toward the innermost side and gradually reduces toward the opening. A boot 10 is applied on the outer circumference of the outer joint member 1 and on the outer circumference of the shaft 2c of the inner joint member 2, and is clamped by means of boot bands 11, 12.

When the outer joint member 1 and the inner joint member 2 make an angular displacement of θ, the torque transmitting balls 3 which are guided by the cage 4 are always held in the bisecting plane (θ/2) of the angle θ regardless of the value of the operating angle θ, thereby maintaining constant velocity characteristics of the joint.

As shown in an enlarged view of Fig.27, a clearance S is provided in the axial direction between the inner circumferential surface 4a (conical surface 4a2) of the cage 4 and the outer circumferential surface 2a of the inner joint member 2, thereby to allow a relative displacement of the inner joint member 2 in the axial direction with respect to the cage 4 (and the outer joint member 1). The axial clearance S and the elastic member 5 constitute the preloading means.

Elastic force E of the elastic member 5, that is interposed between the outer circumferential surface 2a of the inner joint member 2 and the inner circumferential surface 4a (cylindrical surface 4al) of the cage 4, presses the outer circumferential surface 2a of the inner joint member 2 in the direction (toward the innermost side of the joint) opposite to the direction (toward the opening of the joint) of offset of the center O2 of the guide groove 2b. under the pressing force E of the elastic member 5, the inner joint member 2 undergoes a relative displacement in the axial direction to the side (toward the innermost side of the joint) opposite to the direction of offset of the center O2, thereby to press the torque transmitting balls 3, and stops at a position where the inner clearance between the torque transmitting balls 3 and the guide grooves 1b, 2b of the outer and inner joint members 1, 2 disappears. As a result, a certain amount of preload E is applied in the axial direction to the torque transmitting balls 3, thus eliminating the rotation backlash (play in the circumferential direction).

Since the size of the clearance δ (=L-D_{BALL}) of the pocket in the axial direction between the pocket 4b of the cage 4 and the torque transmitting balls 3 is set in a range of 0≦δ≦55µm, the constant velocity universal joint of this embodiment has less resistance to rotation when transmitting torque while taking an operating angle, and provides good feel of steering (smoothness of rotation).

Fig.32 shows a modification of the forth embodiment. In this embodiment, the guide grooves 1b of the outer joint member 1 and the guide grooves 2b of the inner joint member 2 have regions 1b1, 2b1, respectively, that are free of undercut being provided thereon. For example, the region 1b1 is provided in the joint on the innermost side of the center line O1 of the guide groove 1b and is parallel to the axis of the outer joint member 1. The region 2b1 is provided in the joint on the opening side of the center line O2 of the guide groove 2b and is parallel to the axis of the inner joint member 2. By providing the regions 1b1, 2bl that are free of undercut, the operating angle of the joint can be increased.

Fig.33 shows another modification of the fourth embodiment. In this embodiment, the entire region of the inner circumferential surface 4a of the cage 4 is formed in a cylindrical surface, and the elastic member 5 is mounted in the region 4al on the opening side of the inner circumferential surface 4a while an auxiliary ring 7 is mounted in the innermost side region 4a2' of the inner circumferential surface 4a. The auxiliary ring 7 is, for example, an integral ring that has claws 7b and spherical portions (or conical portions) 7c similarly to the elastic member 5 described previously, and is fitted in the innermost side region 4a2' and fastened by a retainer ring 8. The clearance S is provided in the axial direction between the spherical surface (or conical surface) 7c of the auxiliary ring 7 and the outer circumferential surface 2a of the inner joint member 2. The clearance S of the axial direction and the elastic member 5 constitute the preloading means. This constitution has an advantage that the configuration of the cage 4 can be made simpler than in the embodiment described above.

In the automotive steering apparatus shown in Fig. 34, a constant velocity universal joint similar to those of the embodiments described above may be used as a universal joint (28) that connects the main shaft (21) and the intermediate shaft (22) while allowing it to make angular displacement freely.

By the fourth embodiment, the following effects can be obtained.
(1) Since the preloading means is provided to reduce the clearance between the torque transmitting balls and the ball track, rotation backlash (play in the circumferential direction) does not take place.
(2) Since the size of the clearance δ of the pocket in the axial direction between the pocket of the cage and the torque transmitting balls is set in the range of 0 ≦δ≦ 55 µm, the joint has less resistance to rotation when transmitting torque while taking an operating angle, and provides good feel of steering (smoothness of rotation).
(3) The operating angle of the joint can be increased by providing the regions free of undercut in the guide grooves of the outer joint member and the inner joint member.
(4) It is made easier to assemble the cage into the outer joint member by forming the region on the opening side of the inner circumferential surface of the outer joint member in a cylindrical surface that fits onto the outer circumferential surface of the cage.
(5) The constant velocity universal joint of the present invention is light in weight, small in size and low cost, and rotates smoothly without backlash while being capable of taking a large operating angle, and therefore contributes to the improvements in performance such as the stability of steering, feel of steering, steering force and auto-centering capability, and in the freedom of designing the layout of vehicle components when used in the steering apparatus of automobile.

## Claims

1. A ball fixed type constant velocity universal joint comprising an outer joint member (1) having a curved guide groove (1b) formed in the axial direction on a spherical inner circumferential surface (1a) thereof, an inner joint member (2) having a curved guide groove (2b) formed in the axial direction on a spherical outer circumferential surface (2a) thereof, a ball (3) disposed in a ball track formed by the coordination of the guide groove (1b) of the outer joint member (1) and the guide groove (2b) of the inner joint member (2), and a cage (4) that holds the ball (3), with the center of the guide groove (1b) of the outer joint member (1) and the center of the guide groove (2) of the inner joint member (2) being offset to the opposite sides to each other by equal distances in the axial direction with respect to the center plane of the joint that includes the center of the ball (3), the ball track being gradually reduced toward the opening or the innermost side of the joint;
the inner joint member (2) is allowed to make relative displacement in the axial direction with respect to the cage (4), and elastic pressing means (5) having a spherical surface that makes fitting contact with the outer circumferential surface (2a) of the inner joint member (2) is interposed between the outer circumferential surface (2a) of the inner joint member (2) and the inner circumferential surface (4a) of the cage (4), so that the elastic force of the elastic pressing means (5) presses the outer circumferential surface (2a) of the inner joint member (2) to the side opposite to the offset direction of center of the guide groove thereof;
**characterised in that** at least a region on the opening side of the inner circumferential surface (4a) of the cage (4) is a cylindrical surface that fits with the outer circumferential surface of the inner joint member (2), and said elastic pressing means (5) is disposed on the cylindrical surface (4a) of the cage (4).

2. The ball fixed type constant velocity universal joint as claimed in claim 1, wherein the region on the opening side of said inner circumferential surface of the outer joint member is a cylindrical surface that fits with the outer circumferential surface of the cage.

3. The ball fixed type constant velocity universal joint as claimed in claim 1 or 2, wherein the inner joint member and a shaft are formed as an integral part

4. The ball fixed constant velocity joint as claimed in any one of claims 1, 2 or 3, wherein said ball track has such a configuzation that is gradually reduced toward the opening of the joint.

## Patentansprüche

1. Gestellfestes homokinetisches Kugelgelenk, das aufweist: ein äußeres Gelenkelement (1) mit einer gebogenen Führungsnut (1b), die in der axialen Richtung auf einer kugelförmigen inneren Umfangsfläche (1a) davon gebildet wird; ein inneres Gelenkelement (2) mit einer gebogenen Führungsnut (2b), die in der axialen Richtung auf einer kugelförmigen äußeren Umfangsfläche (2a) davon gebildet wird; eine Kugel (3), die in einer Kugellaufbahn angeordnet ist, die durch die Koordination der Führungsnut (1b) des äußeren Gelenkelementes (1) und der Führungsnut (2b) des inneren Gelenkelementes (2) gebildet wird; und einen Käfig (4), der die Kugel (3) hält, wobei die Mitte der Führungsnut (1b) des äußeren Gelenkelementes (1) und die Mitte der Führungsnut (2b) des inneren Gelenkelementes (2) zu den entgegengesetzten Seiten zueinander um gleiche Abstände in der axialen Richtung mit Bezugnahme zur Mittelebene des Gelenkes versetzt sind, die die Mitte der Kugel (3) umfasst, wobei die Kugellaufbahn allmählich in Richtung der Öffnung oder der innersten Seite des Gelenkes reduziert wird;
wobei das innere Gelenkelement (2) eine relative Verschiebung in der axialen Richtung mit Bezugnahme auf den Käfig (4) ausführen darf, und wobei eine elastische Presseinrichtung (5), die eine kugelförmige Fläche aufweist, die einen passenden Kontakt mit der äußeren Umfangsfläche (2a) des inneren Gelenkelementes (2) herstellt, zwischen der äußeren Umfangsfläche (2a) des inneren Gelenkelementes (2) und der inneren Umfangsfläche (4a) des Käfigs (4) angeordnet ist, so dass die elastische Kraft der elastischen Presseinrichtung (5) die äußere Umfangsfläche (2a) des inneren Gelenkelementes (2) zu der Seite entgegengesetzt der Versetzungsrichtung der Mitte von dessen Führungsnut presst;
**dadurch gekennzeichnet, dass** mindestens ein Bereich auf der Öffnungsseite der inneren Umfangsfläche (4a) des Käfigs (4) eine zylindrische Fläche ist, die zur äußeren Umfangsfläche des inneren Gelenkelementes (2) passt, und wobei die elastische Presseinrichtung (5) auf der zylindrischen Fläche (4a) des Käfigs (4) angeordnet ist.

2. Gestellfestes homokinetisches Kugelgelenk nach Anspruch 1, bei dem der Bereich auf der Öffnungsseite der inneren Umfangsfläche des äußeren Gelenkelementes eine zylindrische Fläche ist, die zur äußeren Umfangsfläche des Käfigs passt.

3. Gestellfestes homokinetisches Kugelgelenk nach Anspruch 1 oder 2, bei dem das innere Gelenkelement und eine Welle als ein zusammenhängendes Teil ausgebildet sind.

4. Gestellfestes homokinetisches Kugelgelenk nach einem der Ansprüche 1, 2 oder 3, bei dem die Kugellaufbahn eine derartige Konfiguration aufweist, die allmählich in Richtung der Öffnung des Gelenkes reduziert wird.

## Revendications

1. Joint universel homocinétique du type à rotule fixe, comprenant un élément de joint externe (1) comportant une rainure de guidage courbée (1b) formée dans 1a direction axiale sur une surface circonférentielle interne sphérique (1a) correspondante, un élément de joint interne (2) comportant une rainure de guidage courbée (2b) formée dans la direction axiale sur une surface circonférentielle externe sphérique (2) correspondante, une rotule (3) agencée dans un chemin de roulement de rotule formé par la coordination de la rainure de guidage (1b) de l'élément de joint externe (1) et la rainure de guidage (2b) de l'élément de joint interne (2), et une cage (4) retenant la rotule (3), le centre de la rainure de guidage (1b) de l'élément de joint externe (1) et le centre dé la rainure de guidage (2) de l'élément de joint interne (2) étant décalés vers des côtés mutuellement opposés de distances égales dans la direction axiale par rapport au plan central du joint englobant le centre de la rotule (3), le chemin de roulement de la rotule étant progressivement réduit vers l'ouverture ou le côté interne extrême du joint ;
l'élément de joint interne (2) pouvant effectuer un déplacement relatif dans la direction axiale par rapport à la cage (4), et un moyen de pression élastique (5) comportant une surface sphérique établissant par ajustement un contact avec la surface circonférentielle externe (2a) de l'élément de joint interne (2) étant agencé entre la surface circonférentielle externe (2a) de l'élément de joint interne (2) et la surface circonférentielle interne (4a) de la cage (4), de sorte que la force élastique du moyen de pression élastique (5) presse la surface circonférentielle externe (2a) de l'élément de joint interne (2) vers le côté opposé à la direction de décalage du centre de la rainure de guidage correspondante ;
**caractérisé en ce qu'**au moins une région sur le côté opposé de la surface circonférentielle interne (4a) de la cage 4) est une surface cylindrique ajustée sur la surface circonférentielle externe de l'élément de joint interne (2), le moyen de pression élastique (5) étant agencé sur la surface cylindrique (4a) de la cage (4).

2. Joint universel homocinétique à rotule fixe selon la revendication 1, dans lequel la région sur le côté ouvert de ladite surface circonférentielle interne de l'élément de joint externe est une surface cylindrique ajustée sur la surface circonférentielle externe de la cage.

3. Joint universel homocinétique à rotule fixe selon les revendications 1 ou 2, dans lequel l'élément de joint interne et un arbre sont formés d'une seule pièce.

4. Joint universel homocinétique à rotule fixe selon les revendications 1, 2 ou 3, dans lequel ledit chemin de roulement des rotules a une configuration réduite progressivement vers l'ouverture du joint.
